Europäisches Patentamt

European Patent Office

Office européen des brevets

(11) Veröffentlichungsnummer: **0 499 689 A1**

## (12) EUROPÄISCHE PATENTANMELDUNG

(21) Anmeldenummer: **91116108.1**

(22) Anmeldetag: **21.09.91**

(51) Int. Cl.5: **A47J 31/60**, B01D 29/03, B01D 29/56

(30) Priorität: **18.02.91 DE 4104878**

(43) Veröffentlichungstag der Anmeldung:
**26.08.92 Patentblatt 92/35**

(84) Benannte Vertragsstaaten:
**AT BE CH DE DK ES FR GB GR IT LI LU NL SE**

(71) Anmelder: **Melitta Haushaltsprodukte GmbH & Co. Kommanditgesellschaft**
**Ringstrasse 99**
**W-4950 Minden 1(DE)**

(72) Erfinder: **Ropers, Rolf-Peter, Dipl.-Ing.**
**Hans-Lüken-Strasse 20**
**W-4953 Petershagen(DE)**
Erfinder: **Reuter, Jürgen, Dipl.-Ing.**
**Königstrasse 2**
**W-4950 Minden(DE)**

(74) Vertreter: **Stracke, Alexander, Dipl.-Ing. et al**
**Jöllenbecker Strasse 164**
**W-4800 Bielefeld 1(DE)**

(54) **Kaffee- oder Teemaschine.**

(57) Bei einer bekannten Kaffee- oder Teemaschine, die einen Frischwasserbehälter (1), einen darunter angeordneten Wasserfilter (3) sowie einen daran angeschlossenen Wasserablauf (5) aufweist, der in einen Durchlauferhitzer (2) mündet, ergibt sich aufgrund des durch den Wasserfilter erhöhten Strömungswiderstand des in den Durchlauferhitzer fließenden Wassers bei abnehmender Füllstandshöhe im Frischwasserbehälter das Problem, daß die im Wasserfilter befindliche Restmenge nur noch in so geringem Maße abläuft, daß sich im Durchlauferhitzer eine unerwünschte Dampfbildung einstellt. Damit über den gesamten Brühvorgang hinweg kontinuierlich gefiltertes Wasser in den Durchlauferhitzer einströmen kann, ist seitlich und/oder unter dem Wasserfilter (3) ein mit diesem kommunizierend verbundener Wasserspeicher (4) vorgesehen, der in den Wasserablauf (5) mündet.

Fig. 1

Die vorliegende Erfindung betrifft eine Kaffee- oder Teemachine mit einem Frischwasserbehälter, unterhalb dessen Auslaufes ein an den sich gegenüberliegenden Stirnseiten wasserdurchlässiger Wasserfilter angeordnet ist, und einen, an einen Durchlauferhitzer angeschlossenen Wasserablauf.

Zur Verbesserung der Qualität von Aufgußgetränken aus Kaffee oder Tee ist es bekannt, das dem Wasserleitungsnetz entnommene Frischwasser mittels eines Wasserfilters zu filtern.

Dabei besteht ein solcher, in der Kaffee- oder Teemaschine integrierter Wasserfilter im wesentlichen aus einem Granulat, das aus Aktivkohle und Ionenaustauschern gebildet wird.

Beim Durchlauf des Frischwassers durch den Wasserfilter stellt das Granulat naturgemäß einen Strömungswiderstand dar, der insbesondere dann, wenn die im Frischwasserbehälter befindliche Wassermenge abnimmt, der Wasserdruck also nachläßt, dazu führt, daß die aus dem Wasserfilter austretende Wassermenge nicht mehr ausreicht den Durchlauferhitzer ausreichend mit Wasser zu Versorgen, so daß der durch den Wasserablauf zugeführte Wasserstrom abreißt. Dies führt innerhalb des Durchlauferhitzers zu einer starken Dampfbildung, die beispielsweise zu einer sehr unangenehmen starken Geräuschentwicklung führt. Darüber hinaus erfolgt die Wasserzufuhr der Restmenge praktisch nur noch tröpfchenweise, so daß ein portioniertes Erhitzen und erwünschtes schwallartiges Ausstoßen des Brühwassers in ein Filtergefäß nicht erfolgen kann.

Der vorliegenden Erfindung liegt daher die Aufgabe zugrunde, eine Kaffee- oder Teemaschine der gattungsgemäßen Art so zu gestalten, daß die Wasserzuführung in den Durchlauferhitzer zu jedem Zeitpunkt des Brühvorganges gleichmäßig erfolgt.

Diese Aufgabe wird erfindungsgemäß dadurch gelöst, daß seitlich und/oder unter dem Wasserfilter ein mit diesem kommunizierend verbundener Wasserspeicher vorgesehen ist, der in den Wasserablauf mündet.

Bei gefülltem Frischwasserbehälter, also hohem Wasserdruck, wird zunächst eine größere Wassermenge durch den Wasserfilter strömen, als vom Durchlauferhitzer erhitzt werden kann, so daß sich der Wasserspeicher entsprechend füllt.

Bei Abnahme der im Frischwasserbehälter befindlichen Wassermenge und einer entsprechenden Abnahme des Wasserdrucks, vermindert sich auch die Durchlaufmenge pro Zeiteinheit durch den Wasserfilter, so daß schließlich die Menge des bei jedem Erhitzungsvorgang erhitzten Wassers größer ist als die Menge, die durch den Wasserfilter nachläuft. In diesem Fall wird die notwendige, für einen kontinuierlichen Betrieb des Durchlauferhitzers erforderliche Wassermenge dem Wasserspeicher entnommen.

Es hat sich gezeigt, daß für einen einwandfreien Betrieb in der beschriebenen Weise das Volumen des Wasserspeichers etwa 10 bis 20% des Volumens des Frischwasserbehälters, mindestens jedoch der Menge entsprechen sollte, die maximal auf einmal vom Durchlauferhitzer erhitzt werden kann. Für einen einwandfreien Betrieb der erfindungsgemäßen Kaffee- oder Teemaschine ist nach einem weiteren vorteilhaften Gedanken der Erfindung vorgesehen, den Wasserspeicher mit einer Entlüftungsöffnung, beispielsweise auch in Verbindung mit einem Entlüftungsrohr, das durch den Frischwasserbehälter geführt ist, versehen ist, so daß ein Befüllen bzw. Entleeren des Wasserspeichers uneingeschränkt möglich ist.

Weitere vorteilhafte Ausgestaltungen der Erfindung sind Gegenstand von Unteransprüchen.

Ein Ausführungsbeispiel der der Erfindung wird nachfolgend anhand der beigefügten Zeichnungen beschrieben.

Es zeigen:

Fig. 1    eine erfindungsgemäße Kaffee- oder Teemaschine in einer stark schematisierten, teilweise im Schnitt gezeigten Darstellung,

Fig. 2    eine Einzelheit der Kaffee- oder Teemaschine gemäß dem Ausschnitt II in Figur 1.

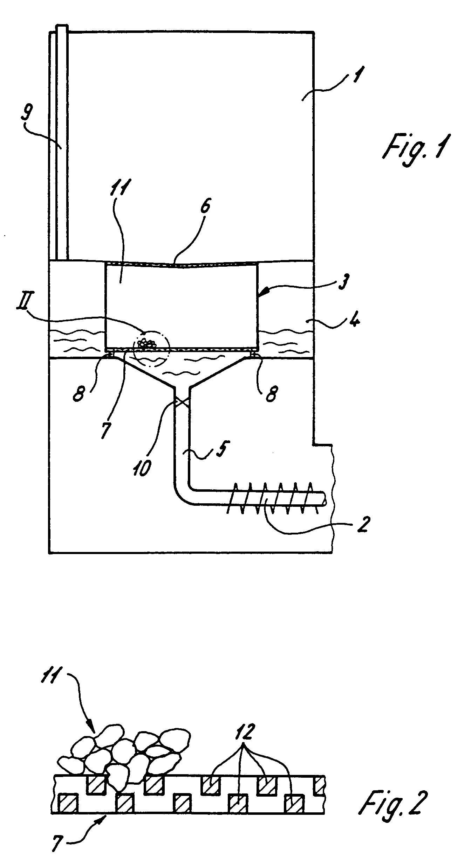

Ein in der Figur 1 dargestellte Kaffee- oder Teemaschine weist einen Frischwasserbehälter 1 auf, in dessen Bodenbereich, unterhalb seines Auslaufes ein Wasserfilter 3 angeordnet ist, dessen dem Frischwasserbehälter 1 Zugewandte Seite ebenso wie die gegenüberliegende wasserdurchlässig sind, wobei zu diesem Zweck ein Deckelsieb 6 und ein Bodensieb 7 vorgesehen sind.

Der Innenraum des Wasserfilters 3 ist mit einem aus Ionenaustauschern und Aktivkohle gebildeten Granulat 11 gefüllt, das das durchlaufende Wasser filtert.

Im vorliegenden Ausführungsbeispiel ist sowohl seitlich als auch unterhalb des Wasserfilters ein Wasserspeicher 4 vorgesehen, der kommunizierend mit dem Wasserfilter 3 verbunden ist, wobei an dessen Unterseite Stütznoppen 8 angeformt sind, mit denen der Wasserfilter 3 am Boden des Wasserspeichers 4 aufliegt.

Grundsätzlich würde es ausreichen, den Wasserspeicher 4 unterhalb des Wasserfilters 3 anzuordnen, wobei, wie bereits beschrieben, der Wasserspeicher 4 ein ausreichendes Volumen aufweisen muß.

An seiner tiefsten Stelle mündet der Wasserspeicher 4 in einen Wasserablauf 5, der an einen Durchlauferhitzer 2 angeschlossen ist, in dem das für den Brühvorgang erforderliche Wasser portionsweise erhitzt wird.

Auf die Darstellung einer Filtereinrichtung und eines Auffanggefäßes für ein mit der Kaffee- oder Teemaschine herstellbares Filtergetränk wurde verzichtet, da diese Komponenten im Zusammenhang mit der vorliegenden Erfindung ohne Bedeutung sind.

Um beim Befüllen des Wasserspeichers 4 bzw. dessen Entleeren einen Druckausgleich zu schaffen, und somit eine einwandfreie Funktion zu gewährleisten, ist an seiner Oberseite ein Entlüftungsrohr 9 angeordnet, das im vorliegenden Fall durch den Frischwasserbehälter 1 nach außen geführt ist.

Des weiteren ist im Wasserablauf 5 ein Rückschlagventil 10 vorgesehen, durch das verhindert wird, daß erhitztes Wasser durch den Wasserablauf 5 in den Wasserspeicher 4 gefördert wird.

In der Figur 2 ist ein Bodensieb 7 dargestellt, das in zwei Ebenen parallel zueinander verlaufende Siebstege 12 aufweist, wobei die in den jeweiligen Ebenen befindlichen Siebstege 12 versetzt zueinander stehen, so daß die Durchlässe zwischen den Siebstegen 12 der oberen Lage und denen der unteren Lage sehr gering gehalten werden können.

Einerseits wird durch diese rostartige Ausbildung des Deckel- und Bodensiebes 6,7 das Granulat sicher gehalten, andererseits wird eine Zwangsführung des Wassers erreicht, da, was insbesondere beim Eintritt des Frischwassers wichtig ist, so eine optimale Ausnutzung, das heißt ein optimales Wirksamwerden des Granulats 11, gewährleistet ist.

Im übrigen ist der Wasserfilter 3 ohne weiteres auswechselbar, wobei im Übergangsbereich zwischen dem Frischwasserbehälter 1 und dem Wasserfilter 3 entsprechende Dichtungen vorgesehen sind, die verhindern, daß ungefiltertes Wasser in den Wasserspeicher 4 gelangt.

In diesem Sinn kann es gleichfalls sinnvoll sein, den Wasserspeicher 4 gegenüber dem Frischwasserbehälter 1 abzudichten.

**Bezugszeichenliste**

| | |
|---|---|
| 1 | Frischwasserbehälter |
| 2 | Durchlauferhitzer |
| 3 | Wasserfilter |
| 4 | Wasserspeicher |
| 5 | Wasserablauf |
| 6 | Deckelsieb |
| 7 | Bodensieb |
| 8 | Stütznoppen |
| 9 | Entlüftungsrohr |
| 10 | Rückschlagventil |
| 11 | Granulat |
| 12 | Siebsteg |

**Patentansprüche**

1. Kaffee- oder Teemaschine mit einem Frischwasserbehälter, unterhalb dessen Auslaufes ein an den sich gegenüberliegenden Stirnseiten wasserdurchlässiger Wasserfilter angeordnet ist, und einem an einen Durchlauferhitzer angeschlossenen Wasserablauf, **dadurch gekennzeichnet**, daß seitlich und/oder unter dem Wasserfilter (3) ein mit diesem kommunizierend verbundener Wasserspeicher (4) vorgesehen ist, der in den Wasserablauf mündet.

2. Kaffee- oder Teemaschine nach Anspruch 1, dadurch gekennzeichnet, daß der Wasserspeicher (4) mit einer Entlüftung, vorzugsweise in einem Entlüftungsrohr (9) versehen ist.

3. Kaffee- oder Teemaschine nach Anspruch 2, dadurch gekennzeichnet, daß das Entlüftungsrohr (9) durch den Frischwasserbehälter (1) geführt ist.

4. Kaffee- oder Teemaschine nach Anspruch 1, dadurch gekennzeichnet, daß der Wasserfilter (3) auf seiner dem Boden des Wasserspeichers (4) zugewandten Unterseite mit Stütznoppen (8) versehen ist, mit denen der Wasserfilter (3) am Boden des Wasserspeichers (4) aufliegt.

5. Kaffee- oder Teemaschine nach Anspruch 1, dadurch gekennzeichnet, daß der Wasserablauf (5) mit einem Rückschlagventil (10) versehen ist.

6. Kaffee- oder Teemaschine nach Anspruch 1, dadurch gekennzeichnet, daß der Wasserfilter (3) ein Deckelsieb (6) und ein Bodensieb (7) aufweist, die jeweils mit parallel und mit Abstand zueinander verlaufenden Siebstegen (12) versehen sind, wobei diese Siebstege (12) in zwei abständig zueinander verlaufenden, parallelen Ebenen angeordnet sind und wobei eine Lage der Siebstege (12) gegenüber der anderen Lage versetzt ist.

7. Kaffee- oder Teemaschine nach Anspruch 1, dadurch gekennzeichnet, daß der Wasserspeicher (4) und der Wasserfilter (3) gegenüber dem Frischwasserbehälter (1) abgedichtet ist.

EP 0 499 689 A1

Fig. 1

Fig. 2

**Europäisches Patentamt**

# EUROPÄISCHER RECHERCHENBERICHT

Nummer der Anmeldung

EP 91 11 6108

## EINSCHLÄGIGE DOKUMENTE

| Kategorie | Kennzeichnung des Dokuments mit Angabe, soweit erforderlich, der maßgehlichen Teile | Betrifft Anspruch | KLASSIFIKATION DER ANMELDUNG (Int. Cl.5) |
|---|---|---|---|
| X | EP-A-0 324 634 (ARA COFFEE CLUB LTD) * Spalte 2, Zeile 47 - Spalte 3, Zeile 11; Abbildung * | 1-3 | A 47 J 31/60 B 01 D 29/03 B 01 D 29/56 |
| Y | | 7 | |
| X | FR-A-2 188 987 (SEB, SOCIETE D'EMBOUTISSAGE DE BOURGOGNE) * Seite 7, Zeile 23 - Seite 8, Zeile 6; Abbildung 3 * | 1,5 | |
| Y | EP-A-0 377 192 (MELITTA-WERKE BENTZ & SOHN) * Spalte 2, Zeilen 15-28; Abbildung * | 7 | |
| A | EP-A-0 165 025 (CERTECH INC.) * Zusammenfassung; Abbildungen 1,2,22 * | 4,6 | |
| A | DE-A-2 256 527 (R.L. WEBER) ----- | | |

**RECHERCHIERTE SACHGEBIETE (Int. Cl.5)**

A 47 J
B 01 D

Der vorliegende Recherchenbericht wurde für alle Patentansprüche erstellt

| Recherchenort | Abschlußdatum der Recherche | Prüfer |
|---|---|---|
| DEN HAAG | 13-05-1992 | SCHMITT J.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.............................................................................
& : Mitglied der gleichen Patentfamilie, übereinstimmendes Dokument

EPO FORM 1503 03.82 (P0403)